# FASCICULE DE BREVET EUROPEEN

(11) **EP 1 597 127 B1**
(45) Date de publication et mention de la délivrance du brevet: **23.08.2006**
(21) Numéro de dépôt: 03811757.8
(22) Date de dépôt: 14.11.2003
(51) Int. Cl.: B60T 13/57

(54) **DISPOSITIF DE COMMANDE DE FREIN**
BREMSSTEUERVORRICHTUNG
BRAKE CONTROL DEVICE

(30) Priorité: 22.11.2002 FR 0214706
(43) Date de publication de la demande: 23.11.2005
(73) Titulaire: ROBERT BOSCH GMBH, 70442 Stuttgart (DE)
(72) Inventeur: RICHARD, Philippe, F-77500 Chelles (FR); MALIGNE, Jean, Charles, F-93300 Aubervilliers (FR); VERBO, Ulysse, F-93600 Aulnay-sous-Bois (FR)
(74) Mandataire: Hurwic, Aleksander Wiktor
(86) Numéro de dépôt international: PCT/EP2003/012749
(87) Numéro de publication internationale: WO 2004/048178

(56) Documents cités:
- US-A- 5 651 300
- US-A- 5 857 399
- US-B1- 6 250 200

## Description

La présente invention concerne un servomoteur et un dispositif de commande de frein muni de ce servomoteur.

On connaît déjà dans l'état de la technique par exemple dans US-B-6250200, un servomoteur d'assistance pneumatique au freinage, du type comprenant :
- un organe de commande de ce servomoteur, mobile axialement, destiné à recevoir un effort de commande appliqué par un utilisateur,
- une enceinte pneumatique comportant deux chambres dites arrière et avant séparées par un piston pneumatique, et
- des moyens formant vannes pneumatiques comprenant :
   ■ des premier et second éléments complémentaires formant vanne de mise en communication de la chambre arrière avec la chambre avant, dits premier et second éléments de vanne d'équilibrage, et
   ■ des premier et second éléments complémentaires formant vanne de mise en communication de la chambre arrière avec une source de pression pneumatique, dits premier et second éléments de vanne d'admission.

Habituellement, l'organe de commande, encore appelé plongeur, est destiné à transmettre un effort de freinage à une tige de commande d'un maître cylindre. Le piston pneumatique est lié à la tige de commande.

Une opération de freinage est commandée par le conducteur au moyen d'une pédale de frein reliée à l'organe de commande.

La pression dans le maître cylindre évolue en fonction de l'effort exercé sur la pédale de frein, dit effort de freinage, de la façon suivante.

Initialement, l'effort de freinage est destiné à vaincre la pré-contrainte d'un ressort de rappel de l'organe de commande en position de repos. Le servomoteur demeure au repos. La pression dans le maître cylindre demeure constante.

L'effort de freinage augmentant, la pré-contrainte du ressort de rappel de l'organe de commande est vaincue et le servomoteur est activé. Or, habituellement, le servomoteur étant dans sa configuration de repos, il existe un jeu axial entre l'organe de commande et la tige de commande. De ce fait, l'activation du servomoteur provoque un saut de pression dans le maître cylindre, ceci à effort de freinage constant, puisque, compte tenu du jeu axial, l'organe de commande ne subit pas de réaction de la part de la tige de commande du maître cylindre.

On comprend donc que plus le saut de pression dans le maître cylindre est important, plus l'action sur la pédale de frein est rapidement efficace.

Après annulation du jeu axial, la pression dans le maître cylindre augmente proportionnellement à l'effort de freinage, tout d'abord, suivant un rapport correspondant au rapport d'assistance du servomoteur, puis, après saturation de l'assistance, suivant un rapport inférieur au précédent.

L'invention a notamment pour but de proposer un servomoteur d'assistance pneumatique au freinage, du type précité, qui lors de son fonctionnement assure un saut de pression dans le maître cylindre plus élevé dans le cas d'un freinage urgent que dans le cas d'un freinage normal.

A cet effet, l'invention a pour objet un servomoteur d'assistance pneumatique au freinage, du type précité, caractérisé en ce que
les moyens formant vannes comprennent un support tubulaire, flottant axialement, muni de deux parties mobiles axialement l'une par rapport à l'autre de façon à régler la longueur de ce support,
les premier et second éléments de vanne d'équilibrage étant portés respectivement par une des parties du support, dite partie d'équilibrage, et le piston pneumatique,
les premier et second éléments de vanne d'admission étant portés respectivement par l'organe de commande et l'autre des parties du support, dite partie d'admission,
les parties d'équilibrage et d'admission du support étant reliées entre elles par des moyens de réglage de leur écartement axial en fonction de la puissance de l'effort appliqué à l'organe de commande.

Suivant des caractéristiques de différents modes de réalisation de ce servomoteur d'assistance pneumatique au freinage :
- les moyens de réglage d'écartement axial comprennent :
   o des moyens de rappel élastique sollicitant les deux parties du support à l'écart l'une de l'autre, et
   o des moyens à échappement d'appuis axiaux, comprenant :
      ■ des appuis axiaux complémentaires portés par l'une des parties du support et une extrémité libre d'au moins un bras solidaire axialement de l'autre des parties du support, et
      ■ des moyens de libération des appuis axiaux complémentaires, portés par l'organe de commande, ces moyens de libération coopérant avec le bras, à l'encontre d'une force élastique de rappel de ce bras en position de coopération des appuis complémentaires, pour écarter radialement les appuis complémentaires lorsque la distance entre l'organe de commande et le piston pneumatique se réduit au delà d'un seuil prédéterminé ;
- l'organe de commande a une forme générale de révolution, les moyens de libération des appuis axiaux complémentaires comprenant au moins un doigt faisant saillie radialement par rapport au contour de l'organe de commande ;
- le doigt de libération est destiné à coopérer avec une rampe d'écartement radial du bras, la dimension de cette rampe étant adaptée pour que l'écartement radial des appuis complémentaires provoquant leur libération n'ait lieu que lorsque la distance entre l'organe de commande et le piston pneumatique se réduit au delà du seuil prédéterminé ;
- le servomoteur comprend au moins trois bras d'échappement et trois doigts de libération répartis angulairement autour respectivement du support et de l'organe de commande ;
- le bras est solidaire axialement de la partie d'admission du support, les appuis axiaux complémentaires étant portés par le bras et la partie d'équilibrage du support ;
- l'extrémité libre du bras a une forme générale de crochet formant une butée d'appui axial destinée à coopérer avec une butée complémentaire étagée, portée par la partie d'équilibrage, cette butée étagée formant deux appuis décalés axialement et radialement correspondant à deux longueurs respectivement normale et allongée du support ;
- le bras est solidaire axialement de la partie d'équilibrage du support, les appuis axiaux complémentaires étant portés par le bras et la partie d'admission du support ;
- la partie d'admission du support comprend une butée d'appui axial destinée à coopérer avec une butée complémentaire étagée, portée par l'extrémité libre du bras, cette butée étagée formant deux appuis décalés axialement et radialement correspondant à deux longueurs respectivement normale et allongée du support ;
- le bras est rappelé en position de coopération des appuis complémentaires par un organe déformable élastiquement coopérant avec ce bras ;
- le bras est rappelé en position de coopération des appuis complémentaires par déformation élastique de ce bras ;
- le servomoteur comprend des moyens de rappel élastique sollicitant l'organe de commande et le support à l'écart l'un de l'autre, de façon à rappeler le support vers le piston et ainsi lier élastiquement ce support à des déplacements du piston ;
- le servomoteur comprend des moyens de rappel élastique sollicitant l'organe de commande et le piston pneumatique à l'écart l'un de l'autre, de façon à rappeler l'organe de commande vers une position de repos ;
- le servomoteur comprend un palpeur destiné à la transmission d'effort entre l'organe de commande et une tige d'actionnement d'un maître cylindre, ce palpeur étant intercalé axialement, d'une part, entre des première et seconde faces d'appui destinées à être liées axialement à la tige d'actionnement, et d'autre part, entre la première face d'appui destinée à être liée à la tige d'actionnement et une face d'appui liée axialement à l'organe de commande ;
- la première face d'appui destinée à être liée à la tige d'actionnement délimite un disque de réaction, déformable élastiquement axialement, destinée à être lié axialement à la tige d'actionnement ;
- la seconde face d'appui destinée à être liée à la tige d'actionnement délimite une extrémité d'une bague d'entretoisement portée par un organe de guidage axial de l'organe de commande, la face d'appui liée axialement à l'organe de commande délimitant un anneau d'appui logé dans la bague d'appui.
- la source de pression pneumatique est l'air atmosphérique.

L'invention a également pour objet un dispositif de commande de frein caractérisé en ce qu'il est piloté par un servomoteur tel que défini précédemment.

L'invention sera mieux comprise à la lecture de la description qui va suivre, donnée uniquement à titre d'exemple et faite en se référant aux dessins dans lesquels :
- la figure 1 est une vue en coupe axiale d'un dispositif de commande de frein selon un premier mode de réalisation de l'invention, ce dispositif étant dans une configuration de repos ;
- la figure 2 est une vue en perspective éclatée du support tubulaire des moyens formant vannes ;
- les figures 3 et 4 sont des vues similaires à celles de la figure 1, montrant le dispositif de commande de frein dans, respectivement, une configuration de freinage normal et une configuration de freinage d'urgence ;
- la figure 5 est une vue similaire à celle de la figure 4 d'un dispositif de commande de frein selon un deuxième mode de réalisation de l'invention ;
- les figures 6 et 7 sont des vues similaires au figures 1 et 2 d'un dispositif de commande de frein selon un troisième mode de réalisation de l'invention.

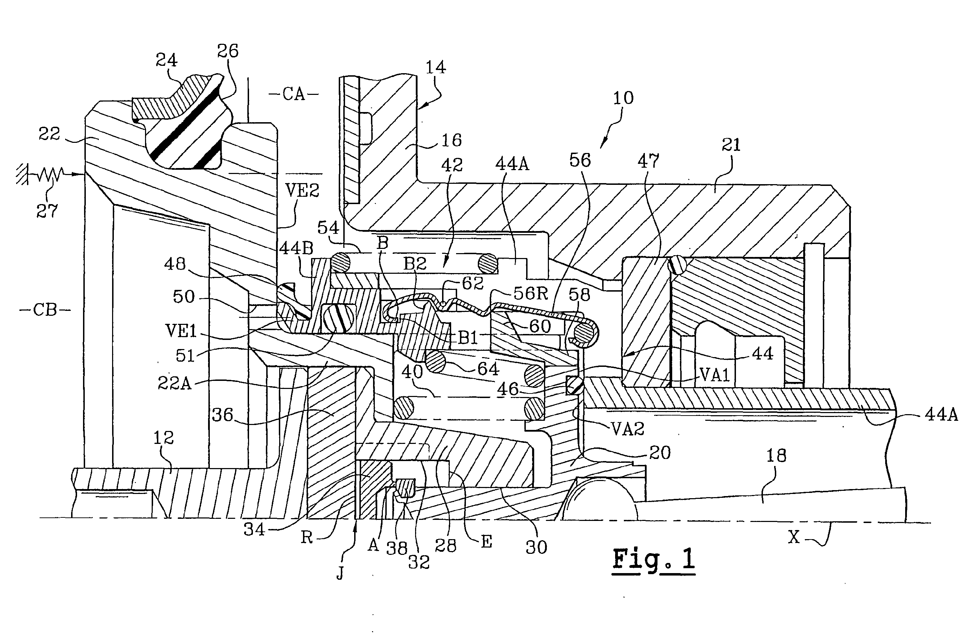

On a représenté sur les figures 1 à 4 un dispositif de commande de frein pour véhicule automobile, selon un premier mode de réalisation de l'invention, désigné par la référence générale 10.

Dans ce qui suit, un élément de la chaîne cinématique reliant le conducteur à un frein du véhicule sera dit « élément arrière » lorsqu'il est proche du conducteur, dans cette chaîne cinématique et « élément avant » lorsqu'il est proche du frein dans cette chaîne cinématique.

Le dispositif 10 de commande de frein comprend une tige 12 d'actionnement d'un maître cylindre classique.

Le dispositif 10 de commande de frein comprend également un servomoteur 14 d'assistance pneumatique au freinage, destiné à piloter le maître cylindre, muni d'une enceinte 16 ayant une forme générale de révolution autour d'un axe X. Cet axe définit une direction axiale.

L'enceinte 16, qui est logée généralement dans le compartiment moteur du véhicule automobile, est intercalée axialement entre le maître-cylindre et une tige de commande 18 reliée à une pédale classique de commande de frein, non représentée. La tige de commande 18 est liée axialement à un plongeur 20 formant un organe mobile de commande destiné à recevoir l'effort de commande appliqué sur la pédale de frein par l'utilisateur. On notera que le plongeur 20 a une forme générale de révolution.

De façon classique, l'enceinte 16 comprend une première chambre, dite chambre arrière CA, susceptible d'être reliée, par des moyens logés dans un prolongement tubulaire arrière 21 de l'enceinte 16, à une source de pression pneumatique, par exemple l'air atmosphérique comme dans le mode de réalisation illustré.

L'enceinte 16 comprend également une seconde chambre, dite chambre avant CB, séparée de la chambre arrière CA par un ensemble mobile comprenant un piston pneumatique 22 relié à une jupe rigide 24 et une membrane souple 26. La chambre avant CB est susceptible d'être reliée à une source de vide à l'aide de moyens de raccordement classiques. L'ensemble mobile sera appelé par la suite ensemble à piston 22.

L'ensemble à piston 22 est déplaçable suivant une direction sensiblement axiale en fonction des variations de pression dans au moins l'une des deux chambres CA, CB. Cette variation de pression est génératrice de la force d'assistance du servomoteur 14.

L'ensemble à piston 22 est solidaire axialement de la tige 12 d'actionnement du maître cylindre.

L'ensemble à piston 22 est rappelé élastiquement vers une position de repos, telle que représentée sur la figure 1, correspondant à un volume minimal de la chambre arrière CA, à l'aide de moyens classiques 27 schématisés sur la figure 1.

Le plongeur 20 est guidé axialement au moyen d'un organe 28 solidaire axialement de la tige 12 d'actionnement du maître cylindre et de l'ensemble à piston 22. L'organe de guidage 28, de forme générale annulaire, comporte une surface interne de portée 30, coopérant avec le contour du plongeur 20 pour le guider axialement, et un chambrage 32 formant un dégagement interne de l'organe de guidage 28.

Un palpeur 34, destiné à la transmission d'effort entre le plongeur 20 et la tige d'actionnement 12, est logé dans le chambrage 32. Ce palpeur 34, déplaçable axialement dans le chambrage 32, est intercalé axialement entre une face d'appui R, délimitant un disque de réaction 36, et un épaulement E de séparation de la surface de portée 30 et du chambrage 32.

Le disque de réaction 36, déformable élastiquement axialement, est intercalé axialement entre la tige 12 d'actionnement du maître cylindre et l'organe de guidage 28. Le disque de réaction 36 et sa face d'appui R sont liés axialement à la tige 12 et à l'ensemble à piston 22.

Le palpeur 34 est également intercalé axialement entre la face d'appui R délimitant le disque de réaction et une face d'appui A délimitant un anneau 38 lié axialement au plongeur 20. L'anneau d'appui 38, rapporté sur le plongeur 20, est solidaire axialement de ce plongeur 20.

Sur la figure 1, on a représenté le dispositif de commande 10, notamment le servomoteur 14, dans une configuration de repos. On notera que dans cette configuration de repos, il existe un jeu axial J entre le plongeur 20 et le disque de réaction 36. Plus particulièrement, le palpeur 34 étant en appui contre l'anneau 38, le jeu J s'étend axialement entre le palpeur 34 et le disque de réaction 36. L'anneau 38 est rapporté sur le plongeur 20. Un réglage précis du jeu J peut être obtenu par exemple par martelage de l'extrémité du palpeur 34.

Lorsque la pédale de frein est brusquement relâchée par l'utilisateur, l'anneau 38 forme une butée axiale de coopération avec l'épaulement E de l'organe de guidage 28 de façon à empêcher une séparation du plongeur 20 et du piston pneumatique 22.

Un ressort 40 travaillant en compression prend appui, d'une part, sur un siège solidaire du piston pneumatique 22 et, d'autre part, sur un siège solidaire du plongeur 20. Ce ressort 40 forme des moyens de rappel élastique sollicitant le plongeur 20 et le piston pneumatique 22 à l'écart l'un de l'autre, de façon à rappeler le plongeur 20 vers une position de repos.

Conformément à un fonctionnement classique du servomoteur 14, la chambre arrière CA est susceptible d'être mise en communication avec, sélectivement, d'une part, la chambre avant CB et, d'autre part, la source de pression pneumatique, à l'aide de moyens 42 formant des vannes pneumatiques.

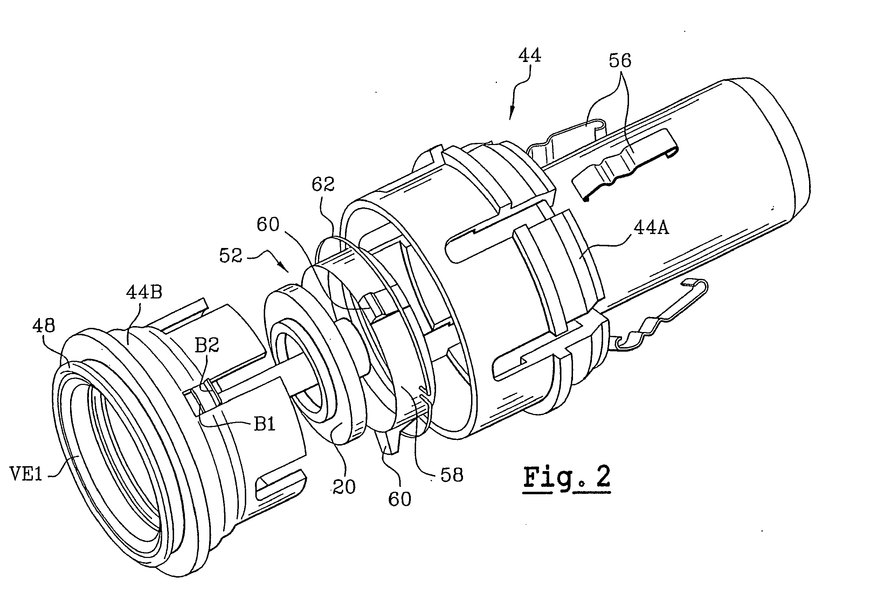

En se référant aux figures 1 et 2, on voit que les moyens 42 formant vannes comprennent un support tubulaire 44 monté flottant axialement dans le prolongement arrière 21 de l'enceinte 16. Ce support 44 est muni de deux parties 44A, 44B mobiles axialement l'une par rapport à l'autre de façon à régler la longueur de ce support 44.

Les moyens 42 formant vannes comprennent également des premier VA1 et second VA2 éléments complémentaires formant une vanne de mise en communication de la chambre arrière CA avec la source de pression pneumatique. Ces éléments sont appelés premier VA1 et second VA2 éléments de vanne d'admission.

Le premier élément VA1 de vanne d'admission est porté par le plongeur 20. Le second élément VA2 de vanne d'admission est porté par la partie arrière 44A du support, dite partie d'admission 44A.

Dans l'exemple illustré, le premier élément VA1 de vanne d'admission porte un joint torique d'étanchéité 46 destiné à coopérer avec le second élément VA2 de vanne d'admission formant un siège d'appui pour le joint torique 46.

En variante, l'agencement du joint 46 et du siège sur les éléments de vanne d'admission pourrait être inversé.

On notera que la partie d'admission 44A du support, logée dans le prolongement arrière 21 de l'enceinte 16, forme un conduit de raccordement de la chambre arrière CA à la source de pression, ceci lorsque la vanne d'admission formée par les éléments VA1, VA2 est ouverte.

Des moyens classiques 47 d'étanchéité et de guidage axial, de forme générale annulaire, sont intercalés radialement entre le contour interne du prolongement 21 de l'enceinte 16 et le contour externe de la partie d'admission 44A du support.

Les moyens 42 formant vannes comprennent encore des premier VE1 et second VE2 éléments complémentaires formant une vanne de mise en communication de la chambre arrière CA avec la chambre avant CB. Ces éléments sont appelés premier VE1 et second VE2 éléments de vanne d'équilibrage.

Le premier élément VE1 de vanne d'équilibrage est porté par la partie avant 44B du support, dite partie d'équilibrage 44B. Le second élément VE2 de vanne d'équilibrage est porté par le piston pneumatique 22.

Dans l'exemple illustré, le premier élément VE1 de vanne d'équilibrage porte un joint annulaire 48 destiné à coopérer avec le second élément VE2 de vanne d'équilibrage formant un siège d'appui pour le joint 48.

Le second élément VE2 de vanne d'équilibrage est muni d'un perçage 50 destiné à mettre en communication entre elles les chambres avant CA et arrière CB. Le perçage 50 est obturable par le premier élément VE1 de vanne d'équilibrage.

En variante, l'agencement du joint 48 et du siège sur les éléments de vanne d'équilibrage pourrait être inversé.

Le piston 22 comprend un prolongement annulaire arrière 22A formant des moyens de guidage axial de la partie d'équilibrage 44B du support. Cette partie 44B est en effet emboîtée autour du prolongement 22A. Un joint torique d'étanchéité 51 est intercalé radialement entre le prolongement 22A et la partie d'équilibrage 44B.

Les parties d'admission 44A et d'équilibrage 44B du support sont reliées entre elles par des moyens 52 de réglage de leur écartement axial en fonction de la puissance de l'effort appliqué par l'utilisateur au plongeur 20.

Les .moyens 52 de réglage d'écartement axial comprennent un ressort 54, travaillant en compression, prenant appui, d'une part, sur un siège solidaire de la partie d'admission 44A du support et, d'autre part, sur un siège solidaire de la partie d'équilibrage 44B du support. Ce ressort 54 forme des moyens de rappel élastique sollicitant les deux parties 44A, 44B du support à l'écart l'une de l'autre.

Les moyens 52 de réglage d'écartement axial comprennent également des moyens à échappement d'appuis axiaux qui seront décrits ci-dessous.

Les moyens à échappement comprennent au moins un bras 56, par exemple trois bras 56 répartis angulairement autour du support 44. Chaque bras 56 est solidaire axialement d'une partie du support 44, par exemple la partie d'admission 44A comme dans le premier mode de réalisation de l'invention.

Ainsi, dans l'exemple illustré sur les figures 1 à 4, chaque bras 56 est métallique et comprend une extrémité articulée sur la partie d'admission 44A du support et une extrémité libre, en forme de crochet. Cette extrémité libre forme une butée délimitant un appui axial B destiné à coopérer avec une butée complémentaire étagée, ménagée sur le contour de la partie d'équilibrage 44B, délimitant deux appuis B1, B2. Ces deux derniers appuis B1, B2, décalés axialement et radialement, déterminent deux longueurs respectivement normale et allongée du support 44.

Les appuis B, B1, B2 constituent des appuis axiaux complémentaires qui, par échappement, permettent de faire évoluer la longueur du support entre ces valeurs normale et allongée.

L'échappement est réalisé à l'aide de moyens de libération des appuis axiaux complémentaires B, B1, B2. Ces moyens de libération comprennent, par exemple, une couronne 58, rapportée sur le plongeur 20, portant trois doigts 60 faisant saillie radialement par rapport au contour du plongeur 20. A chaque bras 56 est associé un doigt de libération 60.

Les doigts de libération 60, répartis angulairement autour du plongeur 20, sont destinés à coopérer avec les bras 56 correspondant, à l'encontre d'une force élastique de rappel de ces bras 56 en position de coopération des appuis complémentaires B, B1, B2.

Les doigts de libération 60 sont destinés ainsi à écarter radialement les appuis complémentaires B, B1 lorsque la distance entre le plongeur 20 et le piston pneumatique 22 se réduit au-delà d'un seuil prédéterminé.

On notera que chaque doigt 60 de libération est destiné à coopérer avec une rampe 56R d'écartement radial du bras 56 correspondant.

Dans l'exemple illustré sur les figures 1 à 4, la rampe 56R est délimitée par un pli du bras 56.

La dimension des rampes 56R est adaptée pour que l'écartement radial des appuis complémentaires B, B1 provoquant leur libération n'ait lieu que lorsque la distance entre le plongeur 20 et le piston pneumatique 22 se réduit au-delà du seuil prédéterminé.

Dans le premier mode de réalisation de l'invention, les bras 56 sont rappelés en position de coopération des appuis complémentaires B, B1, B2 par un anneau filiforme 62 formant un organe déformable élastiquement ceinturant les bras 56 de façon à coopérer avec ces derniers.

Un ressort 64, travaillant en compression, prend appui, d'une part, sur un siège solidaire du plongeur 20 et, d'autre part, sur un siège solidaire du support 44, par exemple de la partie d'équilibrage 44B de ce support, comme dans l'exemple illustré sur les figures 1 à 4. Ce ressort 64 forme des moyens de rappel élastique sollicitant le plongeur 20 et le support 44 à l'écart l'un de l'autre, de façon à rappeler ce support 44 vers l'ensemble à piston 22 et ainsi lier élastiquement le support 44 au déplacement de l'ensemble à piston 22.

On précisera ci-dessous les principaux aspects du fonctionnement du dispositif 10 de commande de frein liés à l'invention.

Au repos, le dispositif 10 de commande de frein est dans la configuration représentée sur la figure 1. Le plongeur 20 est en appui contre une paroi arrière de l'enceinte 16 par l'intermédiaire de la partie d'admission 44A du support. Les moyens 27 de rappel de l'ensemble à piston 22 dans sa position de repos ont pour effet, d'une part, de maintenir comprimé le ressort 54 d'écartement des deux parties 44A, 44B du support et, d'autre part, de faire coopérer entre eux les éléments complémentaires de vannes d'admission VA1, VA2 et d'équilibrage VE1, VE2. Ces vannes sont donc fermées. Les extrémités libres des bras 56, plus particulièrement les appuis B de ces bras, sont maintenues au niveau radialement des appuis B1 (déterminant la longueur normale du support 44) sans pour autant être en contact avec ces appuis B1.

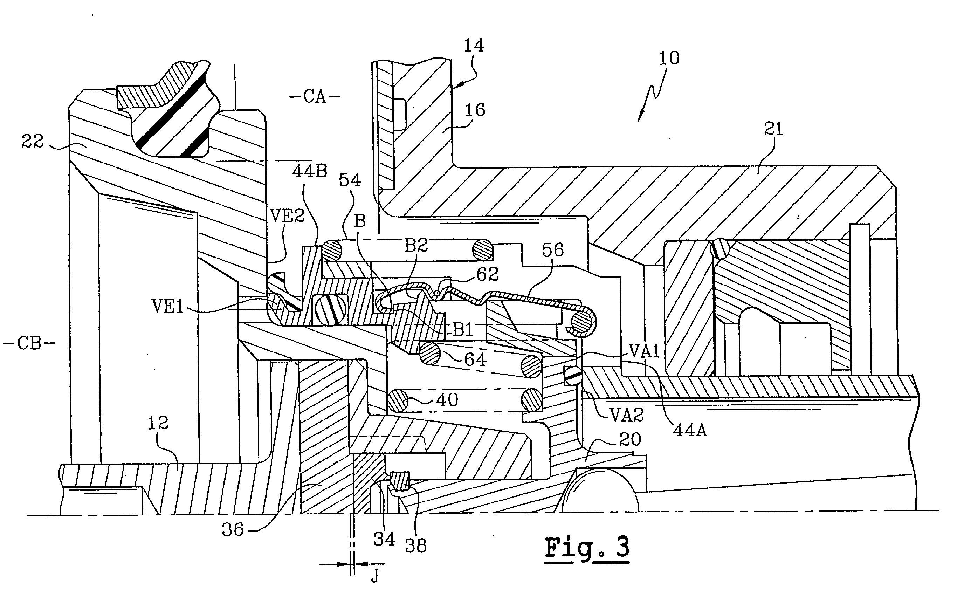

Sur la figure 3, on a représenté le dispositif de commande 10 dans une configuration telle que le plongeur 20 est en équilibre au cours d'une opération de freinage normal. Le support 44 s'est déplacé, conjointement avec l'ensemble à piston 22, vers l'avant. Les bras 56 coopèrent avec les appuis B1 de façon à s'opposer à la force élastique d'écartement des deux parties 44A, 44B du support imposée par le ressort 54.

L'opération de freinage se déroulant dans les conditions normales, la distance entre le plongeur 20 et l'ensemble à piston 22 ne se réduit pas au cours du freinage au-delà du seuil prédéterminé si bien qu'il n'y a pas d'échappement des appuis B des bras par rapport aux appuis B1 de la partie d'équilibrage 44A du support (le déplacement relatif entre les doigts de libération 60 et les rampes 56R des bras n'est pas suffisant pour provoquer cet échappement).

Le support 44 présente une longueur normale correspondant à un jeu axial J susceptible de provoquer un saut de pression normal dans le maître-cylindre lorsque l'utilisateur rompt l'équilibre du plongeur 20 en augmentant la puissance de la force appliquée sur la pédale de frein.

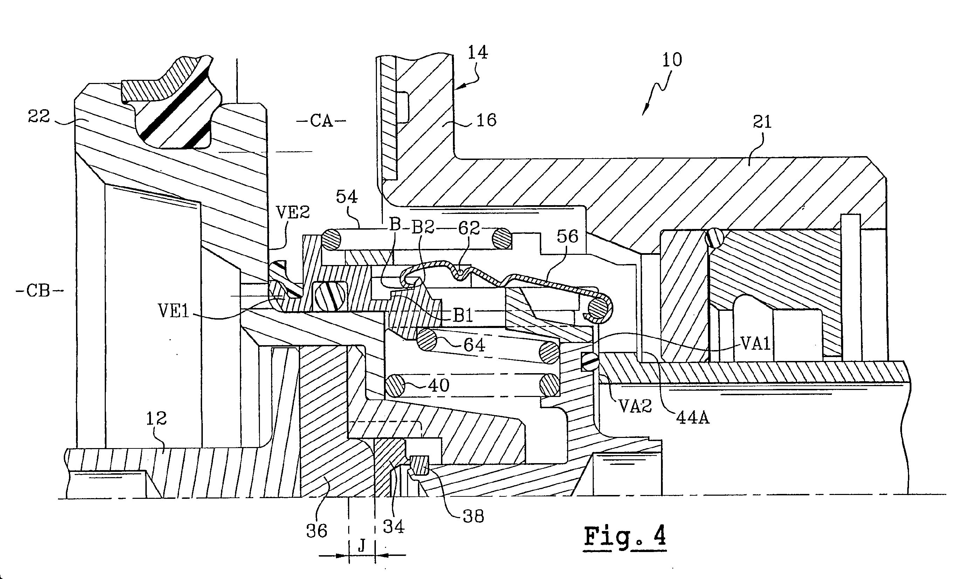

Sur la figure 4, on a représenté le dispositif de commande 10 dans une configuration telle que le plongeur 20 est dans une position d'équilibre au cours d'une opération de freinage d'urgence.

Compte-tenu de l'inertie de l'ensemble à piston 22, le freinage d'urgence (effort important appliqué sur la pédale de frein) provoque un rapprochement relatif du plongeur 20 et de cet ensemble à piston 22 suffisamment important pour que la distance entre le plongeur 20 et l'ensemble à piston 22 se réduise au-delà du seuil prédéterminé. La coopération des doigts de libération 60 avec les rampes 56R des bras, à l'encontre de la force élastique de l'organe de rappel 62, provoque l'échappement des appuis axiaux B vers l'extérieur radialement. Les appuis B coopèrent alors avec les appuis axiaux B2 déterminant la longueur allongée du support 24, ceci après écartement des deux parties 44A, 44B du support imposé par le ressort 54.

Les bras 56, coopérant avec les appuis B2, limitent l'écartement des deux parties 44A, 44B du support en s'opposant à la force de rappel du ressort 54.

Le support 44 présente une longueur allongée imposant un jeu axial J supérieur au jeu obtenu dans les conditions de freinage normal décrites précédemment. Ce jeu J supérieur permet lorsque l'utilisateur rompt l'équilibre du plongeur 20 en augmentant la puissance de la force appliquée sur la pédale de frein, d'obtenir un saut de pression dans le maître-cylindre supérieur à celui évoqué précédemment dans le cas du freinage normal.

Lorsque l'opération de freinage est interrompue (l'utilisateur relâche la pédale de frein), le dispositif de commande 10 se replace dans sa configuration de repos représentée sur la figure 1, les deux parties 44A, 44B du support se rapprochant l'une de l'autre de façon que l'organe élastique 62 rappelle radialement les appuis B des bras 56 vers les appuis B1 de la partie d'équilibrage du support.

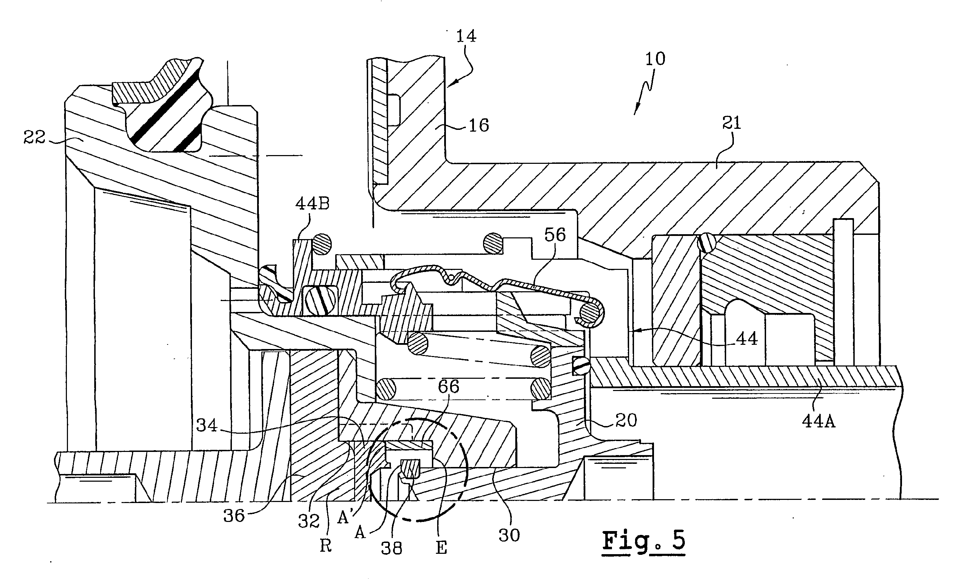

Sur les figures 5 à 7, on a représenté un dispositif 10 de commande de frein selon des deuxième et troisième modes de réalisation de l'invention. Sur ces figures, les éléments analogues à ceux des figures précédentes, sont désignés par des références identiques.

Dans le deuxième mode de réalisation de l'invention représenté sur la figure 5, le palpeur 34 est intercalé axialement entre la face d'appui R délimitant le disque de réaction 36 et une face d'appui A' délimitant une extrémité d'une bague d'entretoisement 66 logée dans le chambrage 32. La bague d'entretoisement 66 est intercalée axialement entre le palpeur 34 et l'épaulement E de séparation de la surface de portée 30 et du chambrage 32. On notera que l'anneau 38 est logé à l'intérieur de la bague 66.

La bague d'entretoisement 66 permet dans certains cas, alors que cette bague 66 est liée axialement à la tige d'actionnement 12, de renvoyer la réaction subie par la tige d'actionnement 12 vers l'ensemble à piston 22 plutôt que vers le plongeur 20, En effet, le palpeur 34 prend appui sur cette bague d'entretoisement 66 plutôt que sur l'anneau d'appui 38 dans certaines configurations de fonctionnement du dispositif de commande 10.

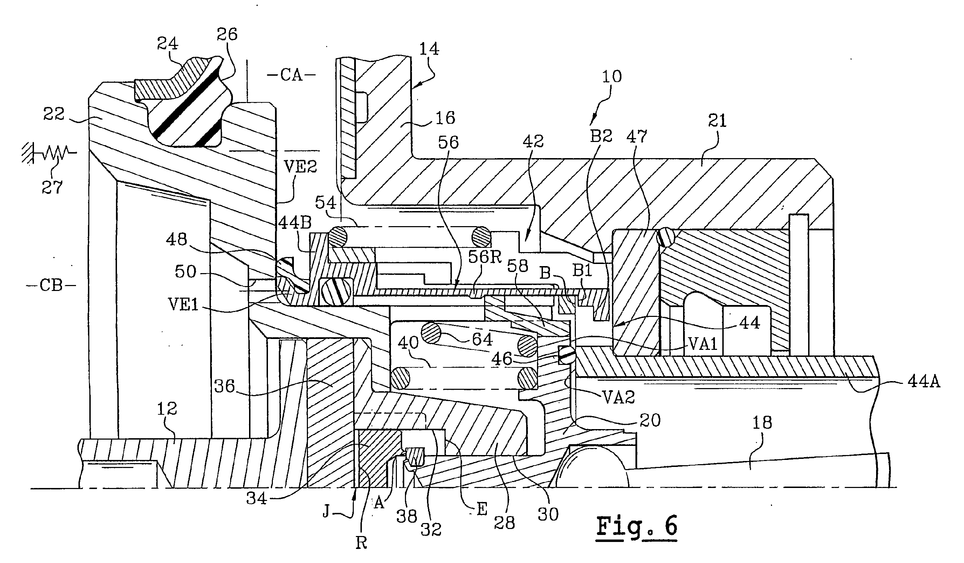

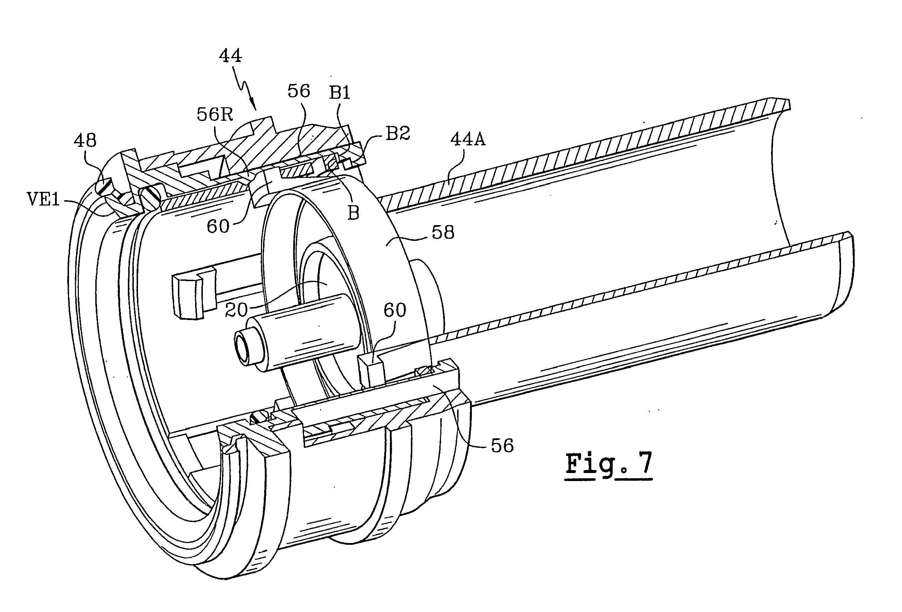

Dans le troisième mode de réalisation de l'invention représenté sur les figures 6 et 7, on voit que les bras 56 sont solidaires axialement de la partie d'équilibrage 44B du support, ces bras 56 étant venus de matière avec cette partie 44B. Les appuis axiaux complémentaires B, B1, B2 sont portés par la partie d'admission 44A du support et les extrémités libres des bras 56.

La partie d'admission 44A du support porte des butées délimitant chacune l'appui axial B destiné à coopérer avec un bras 56 correspondant. En effet, l'extrémité libre de chaque bras 56 porte une butée complémentaire étagée formant les deux appuis B1, B2 décalés axialement et radialement, correspondant aux deux longueurs respectivement normale et allongée du support 44.

On notera que, dans le troisième mode de réalisation de l'invention, les bras 56 sont rappelés en position de coopération des appuis complémentaires B, B1, B2 par déformation élastique de ces bras. Les bras 56 et le support 44 sont avantageusement en plastique.

Le fonctionnement du dispositif de commande 10 selon le troisième mode de réalisation de l'invention est analogue, mutatis mutandis, au fonctionnement du dispositif 10 selon les premier et deuxième modes de réalisation de l'invention.

Parmi les avantages de l'invention, on notera que celle-ci permet, grâce à un réglage automatique de la longueur du support 44, d'assurer un saut de pression dans le maître-cylindre plus élevé dans le cas d'un freinage urgent que dans le cas d'un freinage normal.

## Revendications

1. Servomoteur (14) d'assistance pneumatique au freinage, du type comprenant :
- un organe (20) de commande de ce servomoteur, mobile axialement, destiné à recevoir un effort de commande appliqué par un utilisateur,
- une enceinte pneumatique (16) comportant deux chambres dites arrière (CA) et avant (CB) séparées par un piston pneumatique (22), et
- des moyens formant vannes pneumatiques comprenant :
■ des premier (VE1) et second (VE2) éléments complémentaires formant vanne de mise en communication de la chambre arrière (CA) avec la chambre avant (CB), dits premier (VE1) et second (VE2) éléments de vanne d'équilibrage, et
■ des premier (VA1) et second (VA2) éléments complémentaires formant vanne de mise en communication de la chambre arrière (CA) avec une source de pression pneumatique, dits premier (VA1) et second (VA2) éléments de vanne d'admission,
**caractérisé en ce que**
les moyens formant vannes comprennent un support tubulaire (44), flottant axialement, muni de deux parties (44A, 44B) mobiles axialement l'une par rapport à l'autre de façon à régler la longueur de ce support,
les premier (VE1) et second (VE2) éléments de vanne d'équilibrage étant portés respectivement par une des parties du support, dite partie d'équilibrage (44B), et le piston pneumatique (22),
les premier (VA1) et second (VA2) éléments de vanne d'admission étant portés respectivement par l'organe de commande (20) et l'autre des parties du support, dite partie d'admission (44A),
les parties d'équilibrage (44B) et d'admission (44A) du support étant reliées entre elles par des moyens (52) de réglage de leur écartement axial en fonction de la puissance de l'effort appliqué à l'organe de commande (20).

2. Servomoteur selon la revendication 1, **caractérisé en ce que** les moyens (52) de réglage d'écartement axial comprennent :
- des moyens (54) de rappel élastique sollicitant les deux parties (44A, 44B) du support à l'écart l'une de l'autre, et
- des moyens (56) à échappement d'appuis axiaux, comprenant :
■ des appuis axiaux complémentaires (B, B1, B2) portés par l'une des parties (44A, 44B) du support et une extrémité libre d'au moins un bras (56) solidaire axialement de l'autre des parties (44B, 44A) du support, et
■ des moyens (60) de libération des appuis axiaux complémentaires, portés par l'organe de commande (20), ces moyens de libération coopérant avec le bras (56), à l'encontre d'une force élastique de rappel de ce bras (56) en position de coopération des appuis complémentaires (B, B1, B2), pour écarter radialement les appuis complémentaires (B, B1) lorsque la distance entre l'organe de commande et le piston pneumatique se réduit au delà d'un seuil prédéterminé.

3. Servomoteur selon la revendication 2, **caractérisé en ce que** l'organe de commande (20) a une forme générale de révolution, les moyens de libération des appuis axiaux complémentaires comprenant au moins un doigt (60) faisant saillie radialement par rapport au contour de l'organe de commande.

4. Servomoteur selon la revendication 3, **caractérisé en ce que** le doigt de libération (60) est destiné à coopérer avec une rampe (56R) d'écartement radial du bras (56), la dimension de cette rampe (56R) étant adaptée pour que l'écartement radial des appuis complémentaires (B, B1) provoquant leur libération n'ait lieu que lorsque la distance entre l'organe de commande (20) et le piston pneumatique (22) se réduit au delà du seuil prédéterminé.

5. Servomoteur selon la revendication 3 ou 4, **caractérisé en ce qu'**il comprend au moins trois bras d'échappement (56) et trois doigts de libération (60) répartis angulairement autour respectivement du support (44) et de l'organe de commande (20).

6. Servomoteur selon l'une quelconque des revendications 2 à 5, **caractérisé en ce que** le bras (56) est solidaire axialement de la partie d'admission (44A) du support, les appuis axiaux complémentaires (B, B1, B2) étant portés par le bras (56) et la partie d'équilibrage (44B) du support.

7. Servomoteur selon la revendication 6, **caractérisé en ce que** l'extrémité libre du bras (56) a une forme générale de crochet formant une butée d'appui axial (B) destinée à coopérer avec une butée complémentaire étagée, portée par la partie d'équilibrage, cette butée étagée formant deux appuis (B1, B2) décalés axialement et radialement correspondant à deux longueurs respectivement normale et allongée du support (44).

8. Servomoteur selon l'une quelconque des revendications 2 à 5, **caractérisé en ce que** le bras (56) est solidaire axialement de la partie d'équilibrage (44B) du support, les appuis axiaux complémentaires (B, B1, B2) étant portés par le bras (56) et la partie d'admission (44A) du support.

9. Servomoteur selon la revendication 8, **caractérisé en ce que** la partie d'admission (44A) du support comprend une butée d'appui axial (B) destinée à coopérer avec une butée complémentaire étagée, portée par l'extrémité libre du bras (56), cette butée étagée formant deux appuis (B1, B2) décalés axialement et radialement correspondant à deux longueurs respectivement normale et allongée du support (44).

10. Servomoteur selon l'une quelconque des revendications 2 à 9, **caractérisé en ce que** le bras (56) est rappelé en position de coopération des appuis complémentaires (B, B1, B2) par un organe (62) déformable élastiquement coopérant avec ce bras (56).

11. Servomoteur selon l'une quelconque des revendications 2 à 9, **caractérisé en ce que** le bras (56) est rappelé en position de coopération des appuis complémentaires (B, B1, B2) par déformation élastique de ce bras (56).

12. Servomoteur selon l'une quelconque des revendications précédentes, **caractérisé en ce qu'**il comprend des moyens (64) de rappel élastique sollicitant l'organe de commande (20) et le support (44) à l'écart l'un de l'autre, de façon à rappeler le support (44) vers le piston (22) et ainsi lier élastiquement ce support (44) à des déplacements du piston (22).

13. Servomoteur selon l'une quelconque des revendications précédentes, **caractérisé en ce qu'**il comprend des moyens (40) de rappel élastique sollicitant l'organe de commande (20) et le piston pneumatique (22) à l'écart l'un de l'autre, de façon à rappeler l'organe de commande (20) vers une position de repos.

14. Servomoteur selon l'une quelconque des revendications précédentes, **caractérisé en ce qu'**il comprend un palpeur (34) destiné à la transmission d'effort entre l'organe de commande (20) et une tige (12) d'actionnement d'un maître cylindre, ce palpeur (34) étant intercalé axialement, d'une part, entre des première (R) et seconde (A') faces d'appui destinées à être liées axialement à la tige (12) d'actionnement, et d'autre part, entre la première face d'appui (R) destinée à être liée à la tige d'actionnement (12) et une face d'appui (A) liée axialement à l'organe de commande (20).

15. Servomoteur selon la revendication 14, **caractérisé en ce que** la première face d'appui (R) destinée à être liée à la tige d'actionnement (12) délimite un disque de réaction (36), déformable élastiquement axialement, destinée à être lié axialement à la tige d'actionnement (12).

16. Servomoteur selon la revendication 14 ou 15, **caractérisé en ce que** la seconde face d'appui (A') destinée à être liée à la tige d'actionnement (12) délimite une extrémité d'une bague d'entretoisement (66) portée par un organe (28) de guidage axial de l'organe de commande (20), la face d'appui (A) liée axialement à l'organe de commande (20) délimitant un anneau d'appui (38) logé dans la bague d'appui (66).

17. Servomoteur selon l'une quelconque des revendications précédentes, **caractérisé en ce que** la source de pression pneumatique est l'air atmosphérique.

18. Dispositif de commande de frein **caractérisé en ce qu'**il est piloté par un servomoteur selon l'une quelconque des revendications précédentes.

## Claims

1. Pneumatic brake booster (14), of the type comprising:
- an axially movable control member (20) for controlling this booster and intended to receive a control force applied by a user,
- a pneumatic enclosure (16) containing two chambers, called a rear chamber (CA) and a front chamber (CB), separated by a pneumatic piston (22), and
- means forming pneumatic valves comprising:
• first (VE1) and second (VE2) complementary valve-forming elements for placing the rear chamber (CA) in communication with the front chamber (CB), called first (VE1) and second (VE2) balancing valve elements, and
• first (VA1) and second (VA2) complementary valve-forming elements for placing the rear chamber (CA) in communication with a pneumatic pressure source, called first (VA1) and second (VA2) intake valve elements,
**characterized in that**
the means forming valves comprise an axially floating tubular support (44) provided with two parts (44A, 44B) which can move axially with respect to one another so as to adjust the length of this support,
the first (VE1) and second (VE2) balancing valve elements being borne respectively by one of the parts of the support, called balancing part (44B), and the pneumatic piston (22),
the first (VA1) and second (VA2) intake valve elements being borne respectively by the control member (20) and
the other of the parts of the support, called intake part (44A),
the balancing (44B) and intake (44A) parts of the support being connected to one another by means (52) for adjusting the axial separation thereof as a function of the power of the force applied to the control member (20).

2. Booster according to claim 1, **characterized in that** the axial separation adjustment means (52) comprise:
- elastic return means (54) urging the two parts (44A, 44B) of the support away from one another, and
- means (56) with releasable axial bearing surfaces, comprising:
• complementary axial bearing surfaces (B, B1, B2) borne by one of the parts (44A, 44B) of the support and a free end of at least one arm (56) secured axially to the other of the parts (44B, 44A) of the support, and
• means (60) for releasing the complementary axial bearing surfaces, borne by the control member (20), these release means engaging with the arm (56), against an elastic force returning this arm (56) into a position of engagement between the complementary bearing surfaces (B, B1, B2), in order to radially separate the complementary bearing surfaces (B, B1) when the distance between the control member and the pneumatic piston is reduced beyond a predetermined threshold.

3. Booster according to claim 2, **characterized in that** the control member (20) has a general shape of revolution, the means for releasing the complementary axial bearing surfaces comprising at least one finger (60) projecting radially with respect to the contour of the control member.

4. Booster according to claim 3, **characterized in that** the release finger (60) is intended to engage with a ramp (56R) for the radial separation of the arm (56), the size of this ramp (56R) being designed so that the radial separation of the complementary bearing surfaces (B, B1), causing the release thereof, takes place only when the distance between the control member (20) and the pneumatic piston (22) is reduced beyond the predetermined threshold.

5. Booster according to claim 3 or 4, **characterized in that** it comprises at least three releasable arms (56) and three release fingers (60) distributed angularly around the support (44) and the control member (20) respectively.

6. Booster according to any one of claims 2 to 5, **characterized in that** the arm (56) is secured axially to the intake part (44A) of the support, the complementary axial bearing surfaces (B, B1, B2) being borne by the arm (56) and the balancing part (44B) of the support.

7. Booster according to claim 6, **characterized in that** the free end of the arm (56) has a general hook shape forming an axial bearing stop (B) intended to engage with a stepped complementary stop borne by the balancing part, this stepped stop forming two axially and radially offset bearing surfaces (B1, B2) corresponding to two, respectively normal and elongated, lengths of the support (44).

8. Booster according to any one of claims 2 to 5, **characterized in that** the arm (56) is secured axially to the balancing part (44B) of the support, the complementary axial bearing surfaces (B, B1, B2) being borne by the arm (56) and the intake part (44A) of the support.

9. Booster according to claim 8, **characterized in that** the intake part (44A) of the support comprises an axial bearing stop (B) intended to engage with a stepped complementary stop borne by the free end of the arm (56), this stepped stop forming two axially and radially offset bearing surfaces (B1, B2) corresponding to two, respectively normal and elongated, lengths of the support (44).

10. Booster according to any one of claims 2 to 9, **characterized in that** the arm (56) is returned into a position of engagement between the complementary bearing surfaces (B, B1, B2) by an elastically deformable member (62) engaging with this arm (56).

11. Booster according to any one of claims 2 to 9, **characterized in that** the arm (56) is returned into a position of engagement between the complementary bearing surfaces (B, B1, B2) by elastic deformation of this arm (56).

12. Booster according to any one of the preceding claims, **characterized in that** it comprises elastic return means (64) urging the control member (20) and the support (44) away from one another in such a way as to return the support (44) toward the piston (22) and thus connect this support (44) elastically to movements of the piston (22).

13. Booster according to any one of the preceding claims, **characterized in that** it comprises elastic return means (40) urging the control member (20) and the pneumatic piston (22) away from one another, in such a way as to return the control member (20) toward a rest position.

14. Booster according to any one of the preceding claims, **characterized in that** it comprises a feeler (34) intended for the transmission of force between the control member (20) and a master cylinder actuating rod (12), this feeler (34) being inserted axially, on the one hand, between first (R) and second (A') bearing faces intended to be connected axially to the actuating rod (12), and, on the other hand, between the first bearing face (R) intended to be connected to the actuating rod (12) and a bearing face (A) connected axially to the control member (20).

15. Booster according to claim 14, **characterized in that** the first bearing face (R) intended to be connected to the actuating rod (12) delimits a reaction disk (36) which is elastically deformable axially and intended to be connected axially to the actuating rod (12).

16. Booster according to claim 14 or 15, **characterized in that** the second bearing face (A') intended to be connected to the actuating rod (12) delimits one end of a spacer sleeve (66) borne by a member (28) for axially guiding the control member (20), the bearing face (A) connected axially to the control member (20) delimiting a bearing ring (38) housed within the bearing sleeve (66).

17. Booster according to any one of the preceding claims, **characterized in that** the pneumatic pressure source is atmospheric air.

18. Brake control device, **characterized in that** it is driven by a booster according to any one of the preceding claims.

## Patentansprüche

1. Pneumatischer Servomotor (14) zur Bremsunterstützung, vom Typ mit:
- einem Organ (20) zur Steuerung dieses Servomotors, das axial beweglich ist und eine von einem Benutzer aufgebrachte Steuerkraft aufnehmen soll,
- einem pneumatischen Raum (16), der zwei Kammern aufweist, die hintere Kammer (CA) und vordere Kammer (CB) genannt werden und durch einen pneumatischen Kolben (22) getrennt sind, und
- Mitteln, die pneumatische Ventile bilden, mit:
■ einem ersten Element (VE1) und einem zweiten Element (VE2), die komplementär sind und ein Ventil zur Verbindung der hinteren Kammer (CA) mit der vorderen Kammer (CB) bilden und erstes Ausgleichsventilelement (VE1) und zweites Ausgleichsventilelement (VE2) genannt werden, und
■ einem ersten Element (VA1) und einem zweiten Element (VA2), die komplementär sind und ein Ventil zur Verbindung der hinteren Kammer (CA) mit einer pneumatischen Druckquelle bilden und erstes Einlassventilelement (VA1) und zweites Einlassventilelement (VA2) genannt werden,
**dadurch gekennzeichnet, dass**
die Mittel, die Ventile bilden, einen röhrenförmigen Träger (44) aufweisen, der axial schwimmt und mit zwei Abschnitten (44A, 44B) versehen ist, die so zueinander axial beweglich sind, dass die Länge dieses Trägers eingestellt wird,
wobei das erste Ausgleichsventilelement (VE1) und das zweite Ausgleichsventilelement (VE2) von einem der Abschnitte des Trägers, der Ausgleichsabschnitt (44B) genannt wird, bzw. von dem pneumatischen Kolben (22) getragen sind,
wobei das erste Einlassventilelement (VA1) und das zweite Einlassventilelement (VA2) von dem Steuerorgan (20) bzw. von dem anderen der Abschnitte des Trägers, der Einlassabschnitt (44A) genannt wird, getragen sind,
wobei der Ausgleichsabschnitt (44B) und der Einlassabschnitt (44A) des Trägers durch Mittel (52) zum Einstellen ihres axialen Abstands in Abhängigkeit von der Stärke der auf das Steuerorgan (20) aufgebrachten Kraft miteinander verbunden sind.

2. Servomotor nach Anspruch 1, **dadurch gekennzeichnet, dass** die Mittel (52) zum Einstellen des axialen Abstands folgendes aufweisen:
- Mittel (54) für ein elastisches Zurückstellen, die die beiden Abschnitte (44A, 44B) des Trägers voneinander weg beaufschlagen, und
- Lösemittel (56) mit axialer Anlage, mit:
■ komplementären axialen Anlagen (B, B1, B2), die von einem der Abschnitte (44A, 44B) des Trägers und von einem freien Ende mindestens eines Arms (56) getragen sind, der axial fest mit dem anderen der Abschnitte (44B, 44A) des Trägers verbunden ist, und
■ von dem Steuerorgan (20) getragenen Mitteln (60) zum Freigeben der komplementären axialen Anlagen, wobei diese Freigabemittel mit dem Arm (56) entgegen einer elastischen Kraft zum Zurückstellen dieses Arms (56) in eine Position des Zusammenwirkens der komplementären Anlagen (B, B1, B2) zusammenwirken, um die komplementären Anlagen (B, B1) radial voneinander wegzurücken, wenn der Abstand zwischen dem Steuerorgan und dem pneumatischen Kolben über einen vorbestimmten Schwellenwert verringert wird.

3. Servomotor nach Anspruch 2, **dadurch gekennzeichnet, dass** das Steuerorgan (20) insgesamt eine Rotationsform besitzt, wobei die Mittel zum Freigeben der komplementären axialen Anlagen mindestens einen Zapfen (60) aufweisen, der in Bezug auf die Kontur des Steuerorgans radial hervorsteht.

4. Servomotor nach Anspruch 3, **dadurch gekennzeichnet, dass** der Freigabezapfen (60) mit einer Rampe (56R) zum radialen Wegrücken des Arms (56) zusammenwirken soll, wobei die Größe dieser Rampe (56R) so angepasst ist, dass das radiale Wegrücken der komplementären Anlagen (B, B1), das ihre Freigabe bewirkt, nur dann stattfindet, wenn der Abstand zwischen dem Steuerorgan (20) und dem pneumatischen Kolben (22) über den vorbestimmten Schwellenwert verringert wird.

5. Servomotor nach Anspruch 3 oder 4, **dadurch gekennzeichnet, dass** er mindestens drei Lösearme (56) und drei Freigabezapfen (60) aufweist, die winkelmäßig um den Träger (44) bzw. um das Steuerorgan (20) herum angeordnet sind.

6. Servomotor nach einem der Ansprüche 2 bis 5, **dadurch gekennzeichnet, dass** der Arm (56) axial fest mit dem Einlassabschnitt (44A) des Trägers verbunden ist, wobei die komplementären axialen Anlagen (B, B1, B2) von dem Arm (56) und dem Ausgleichsabschnitt (44B) des Trägers getragen sind.

7. Servomotor nach Anspruch 6, **dadurch gekennzeichnet, dass** das freie Ende des Arms (56) insgesamt die Form eines Hakens besitzt, der einen Anschlag (B) zur axialen Anlage bildet, welcher mit einem komplementären, gestuften Anschlag zusammenwirken soll, der von dem Ausgleichsabschnitt getragen ist, wobei dieser gestufte Anschlag zwei axial und radial versetzte Anlagen (B1, B2) bildet, die zwei Längen, einer normalen bzw. einer verlängerten Länge, des Trägers (44) entsprechen.

8. Servomotor nach einem der Ansprüche 2 bis 5, **dadurch gekennzeichnet, dass** der Arm (56) axial fest mit dem Ausgleichsabschnitt (44B) des Trägers verbunden ist, wobei die komplementären axialen Anlagen (B, B1, B2) von dem Arm (56) und dem Einlassabschnitt (44A) des Trägers getragen sind.

9. Servomotor nach Anspruch 8, **dadurch gekennzeichnet, dass** der Einlassabschnitt (44A) des Trägers einen Anschlag (B) zur axialen Anlage aufweist, der mit einem komplementären, gestuften Anschlag zusammenwirken soll, der von dem freien Ende des Arms (56) getragen ist, wobei dieser gestufte Anschlag zwei axial und radial versetzte Anlagen (B1, B2) bildet, die zwei Längen, einer normalen bzw. einer verlängerten Länge, des Trägers (44) entsprechen.

10. Servomotor nach einem der Ansprüche 2 bis 9, **dadurch gekennzeichnet, dass** der Arm (56) von einem elastisch verformbaren Organ (62), das mit diesem Arm (56) zusammenwirkt, in die Position zurückgestellt wird, in der die komplementären Anlagen (B, B1, B2) zusammenwirken.

11. Servomotor nach einem der Ansprüche 2 bis 9, **dadurch gekennzeichnet, dass** der Arm (56) durch die elastische Verformung dieses Arms (56) in die Position zurückgestellt wird, in der die komplementären Anlagen (B, B1, B2) zusammenwirken.

12. Servomotor nach einem der vorhergehenden Ansprüche, **dadurch gekennzeichnet, dass** er Mittel (64) für ein elastisches Zurückstellen aufweist, die das Steuerorgan (20) und den Träger (44) voneinander weg beaufschlagen, so dass der Träger (44) zum Kolben (22) zurückgestellt wird und somit dieser Träger (44) elastisch mit Verlagerungen des Kolbens (22) verbunden ist.

13. Servomotor nach einem der vorhergehenden Ansprüche, **dadurch gekennzeichnet, dass** er Mittel (40) für ein elastisches Zurückstellen aufweist, die das Steuerorgan (20) und den pneumatischen Kolben (22) voneinander weg beaufschlagen, so dass das Steuerorgan (20) in eine Ruheposition zurückgestellt wird.

14. Servomotor nach einem der vorhergehenden Ansprüche, **dadurch gekennzeichnet, dass** er einen Taster (34) aufweist, der für die Kraftübertragung zwischen dem Steuerorgan (20) und einer Stange (12) zur Betätigung eines Hauptzylinders vorgesehen ist, wobei dieser Taster (34) axial einerseits zwischen einer ersten Anlagefläche (R) und einer zweiten Anlagefläche (A'), die axial mit der Betätigungsstange (12) verbunden werden sollen, und andererseits zwischen der ersten Anlagefläche (R), die mit der Betätigungsstange (12) verbunden werden soll, und einer axial mit dem Steuerorgan (20) verbundenen Anlagefläche (A) angeordnet ist.

15. Servomotor nach Anspruch 14, **dadurch gekennzeichnet, dass** die erste Anlagefläche (R), die mit der Betätigungsstange (12) verbunden werden soll, eine Reaktionsscheibe (36) begrenzt, die elastisch axial verformbar ist und axial mit der Betätigungsstange (12) verbunden werden soll.

16. Servomotor nach Anspruch 14 oder 15, **dadurch gekennzeichnet, dass** die zweite Anlagefläche (A'), die mit der Betätigungsstange (12) verbunden werden soll, ein Ende eines Abstandsrings (66) begrenzt, der von einem Organ (28) zur axialen Führung des Steuerorgans (20) getragen ist, wobei die axial mit dem Steuerorgan (20) verbundene Anlagefläche (A) einen Stützring (38) begrenzt, der im Abstandsring (66) aufgenommen ist.

17. Servomotor nach einem der vorhergehenden Ansprüche, **dadurch gekennzeichnet, dass** die pneumatische Druckquelle die atmosphärische Luft ist.

18. Vorrichtung zur Bremssteuerung, **dadurch gekennzeichnet, dass** sie von einem Servomotor nach einem der vorhergehenden Ansprüche angesteuert wird.
